(19) Europäisches Patentamt
European Patent Office
Office européen des brevets

(11) Publication number: **0 325 030 A2**

(12) **EUROPEAN PATENT APPLICATION**

(21) Application number: **88310781.5**

(22) Date of filing: **15.11.88**

(51) Int. Cl.4: **C08L 77/06 , C08G 69/26 , B32B 27/34**

(30) Priority: **16.11.87 JP 289096/87**

(43) Date of publication of application: **26.07.89 Bulletin 89/30**

(84) Designated Contracting States: **AT BE CH DE ES FR GB GR IT LI LU NL SE**

(71) Applicant: **MITSUI PETROCHEMICAL INDUSTRIES, LTD.**
**2-5, Kasumigaseki 3-chome Chiyoda-ku**
**Tokyo 100(JP)**

(72) Inventor: **Zenitani, Yurimasa**
**1655-95, Onocho**
**Saiki-gun Hiroshima(JP)**
Inventor: **Taguchi, Toru**
**2-6, Muronokicho 1-chome**
**Iwakuni Yamaguchi(JP)**
Inventor: **Ikeda, Akio**
**3-4, Misono 1-chome**
**Otake Hiroshima(JP)**

(74) Representative: **Myerscough, Philip Boyd et al**
**J.A.Kemp & Co. 14, South Square Gray's Inn**
**London, WC1R 5EU(GB)**

(54) **Polyamide resin compositions and laminates thereof.**

(57) A polyamide resin composition which comprises:

(A) a random polyamide comprising

(a) at least one isphthaloyl diamine component represented by the general formula (I) of

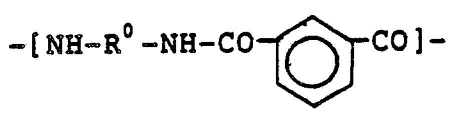

wherein $R^0$ represents a divalent hydrocarbon group of 4-25 carbons, in a total amount of 50-100 mole %; and

(b) at least one diacyloyl diamine component represented by the general formula (II) of

$-[NH-R^0-NHCO-Ar-CO)-$

wherein $R^0$ is as defined above and Ar represents a divalent aromatic hydrocarbon group of 6-20 carbons but is not a 1,3-phenylene group, in a total amount of 50-0 mole %, and

(B) a polyamide comprising:

(c) at least one diamine component of 4-25 carbons or dicarboxylic acid component of 4-20 carbons which have no aromatic nuclei; or

(d) at least one aminocarboxylic acid component; or

(e) at least one diamine component of 4-25 carbonss,dicarboxylic acid component of 4-20 carbons which has no aromatic nuclei, or aminocarboxylic acid component.

EP 0 325 030 A2

The composition has high impermeability and a low glass transition temperature and may be used to manufacture laminates and moulded articles.

## Polyamide Resin Compositions and Laminates Thereof

This invention relates to a polyamide resin composition which has a high gas barrier or impermeability, and a low glass transition temperature, Tg, as well as a high melt flow, heat resistance, mechanical strength and transparency, suitable for use as, for example, package materials such as plastic bottles or laminated films.

Bottles for liquors, wines, seasonings, aerated soft drinks, cosmetics, liquid detergents and the like are increasingly changing from glass bottles to plastic bottles. A variety of resins are used, and for instace, a polyethylene terephthalate resin is widely used as bottles for seasonings, soft drinks, detergents or cosmetics since the resins has a high gas barrier and transparency. However, the resin is still insufficient in gas barrier when applied to bottles for beer or aerarated soft drinks, and thus in such use, plastic bottles are needed to have a thick wall to be of a sufficient gas barrier.

On the other hand, aliphatic polyamide resins such as nylon 6 or 66 have a higher gas barrier when the resins are dry than the polyethylene terephthalate resins. However, aliphatic polyamide resins have in general a water absorption of about 10 %, and when the resin has absorbed water, it gets smaller in gas barrier than the polyethylene terephthalate resins.

To solve the undesired water absorptivity of the polyamide resins, crystalline polyamide resins are proposed in Japanese Patent Laid-Open No. 60-195126. However, the resin is inferior in transparency because of its high crystallinity.

Therefore, it is an object of the invention to provide a polyamide resin composition which has a high gas barrier or impermeability and a low Tg, and is suitable for use in particular as laminates for package materials such as bottles or laminated films.

In accordance with the invention, there is provided a polyamide resin composition which comprises:

(A) a random polyamide composed of:

(a) isophthaloyl diamine components represented by the general formula (I) of

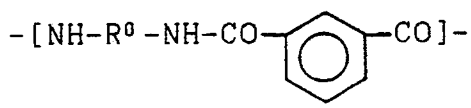

wherein $R^0$ represents a divalent hydrocarbon group of 4-25 carbons, in amounts of 50-100 mole %; and

(b) diacyloyl diamine components represented by the general formula (II) of

$-[NH-R^0-NHCO-Ar-CO]-$

wherein $R^0$ is the same as before, and Ar represents a divalent aromatic hydrocarbon group of 6-20 carbons except 1, 3-phenylene group, in amounts of 50-0 mole %; and

(B) a polymide composed of:

(c) diamine components of 4-25 carbons and dicarboxylic acid components of 4-20 carbons which have no aromatic nuclei; or

(d) aminocarboxylic acid components; or

(e) diamine components of 4-25 carbons, dicarboxylic acid components of 4-20 carbons which have no aromatic nuclei, and aminocarboxylic acid components.

The polyamide resin composition of the invention contains a random polyamide (A) composed of:

(a) isophthaloyl diamine components represented by the general formula (I) of

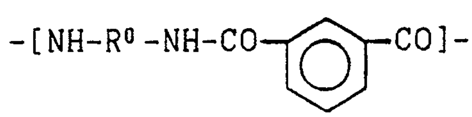

(I)

wherein $R^0$ represents a divalent hydrocarbon group of 4-25 carbons, in amounts of 50-100 mole %; and

(b) diacyloyl diamine components represented by the general formula (II) of

$-[NH-R^0-NHCO-Ar-CO]-$ (II)

wherein $R^0$ is the same as before, and Ar represents a divalent aromatic hydrocarbon group of 6-20

carbons except 1, 3-phenylene group, in amounts of 50-0 mole %.

Preferably the randon polymide (A) is composed of the isophthaloyl diamine component (a) in amounts of 60-95 mole % and the diacyloyl diamine component (b) in amounts of 5-40 mole %, and most preferably the isophthaloyl diamine component (a) in amounts of 65-85 mole % and the diacyloyl diamine component (b) in amounts of 15-35 mole %.

In the above isophthaloyl diamine component (a) and diacyloyl diamine component (b), $R^0$ is a diamine residual of a divalent hydrocarbon group of 4-25 carbons. The $R^0$ may be a divalent aliphatic hydrocarbon group of 4-25 carbons; a divalent alicyclic hydrocarbon group of 6-25 carbons containing at least one alicyclic hydrocarbon ring; or a divalent aromatic hydrocarbon group of 6-25 carbons containing at least one aromatic hydrocarbon ring.

It is preferred that the isophthaloyl diamine component (a) and the diacyloyl diamine component (b) are, respectively, mixtures of those in which $R^0$ is $R^1$, $R^2$ and/or $R^3$ wherein $R^1$ is a divalent aliphatic hydrocarbon group of 4-25 carbons; $R^2$ is a divalent alicyclic hydrocarbon group of 6-25 carbons containing at least one alicyclic hydrocarbon ring; and $R^3$ is a divalent aromatic hydrocarbon group of 6-25 carbons contai ning at least one aromatic hydrocarbon ring.

It is most preferred that the isophthaloyl diamine component (a) and the diacyloyl diamine component (b) are, respectively, mixtures of those which contains a first diamine component wherein $R^0$ is $R^1$ in amounts of 5-98 mole %, preferably in amounts of 40-85 mole %, and those which contain a second diamine component wherein $R^0$ is $R^2$ and/or $R^3$ in amounts of 95-2 mole %, preferably in amounts of 60-15 mole %.

The diamine components which have a divalent aliphatic hydrocarbon group of 4-25 carbons, $R^1$, as $R^0$, may be exemplified by, for example, 1,4-diaminobutane, 1,5-diaminopentane, 1,6-diaminohexane, 1,7-diaminoheptane, 1,8-diaminooctane, 1,9-diaminononane, 1,10-diaminonodecane, 1,11-diaminonoundecane, 1, 12-diaminododecane, 1, 13-diaminotridecane, 1, 14-diaminotetradecane, 1,15-diaminopentadecane, 1,16-diaminohexadecane, 1,17-diaminoheptadecane, 1,18-diaminooctadecane, 1,19-diaminononadecane or 1,20-diaminonoeicosan.

These alkylenediamine conponents may be contained singly or as a mixture of two or more in the ispohthaloyl diamine component and diacyloyl diamine component, respectively. However, it is preferred that the alkylenediamine component be of 6-16 carbons, and it is most preferred that the alkylenediamine component be 1,4-diaminobutane or 1,6-diaminohexane or a mixture of these.

The diamine components which contain $R^2$, namely, a divalent alicyclic hydrocarbon group of 6-25 carbons containing at least one alicyclic hydrocarbon ring, as $R^0$, may be exemplified by, for example, 1,3-diaminocyclohexane, 1,4-diaminocyclohexane, 1,3-bis(aminomethyl)cyclohexane, 1,4-bis(aminomethyl)-cyclohexane, isophoronediamine, piperazine, 2,5-diamethylpiperazine, bis(4-aminocyclohexyl)methane, bis-(4-aminocyclohexyl)propane, 3,3′-diaminodicyclohexylmethane, 3,3′-diaminodicyclohexylpropane, 3,4′-diaminodicyclohexylmethane, 3,3′-diaminodicyclohexylpropane, 4,4′-diamino-3,3′-dimethyldicyclohexylmethane, 4,4′-diamino-3,3′-diamethyldicyclohexylpropane, 4,4′-diamino-3,3′,5,5′-tetramethyldicyclohexylmethane, 4,4′-diamino-3,3′,5,5′-tetramethyldicyclohexylpropane, 4,4′-diamino-3,3′-dimethyldicyclohexyl, 4,4′-diamino-3,3′,5,5′-tetramethyldicyclohexyl, α,α′-bis(4-aminocyclohexyl)-p-diisopropylbenzene, α,α′-bis(4-aminocyclohexyl)-m-diisopropylbenzene or α,α′-bis(4-aminocyclohexyl)-1,3-cyclohexane.

The diamine components which contain $R^3$, namely, a divalent aromatic hydrocarbon group of 6-25 carbons containing at least one aromatic hydrocarbon ring, as $R^0$, may be exemplified by, for example, p-phenylenediamine, m-phenylenediam ine, p-xylylenediamine, m-xylylenediamine, 4,4′-diaminodiphenylmethane, 4,4′-diaminodiphenylether, 4,4′-diaminodiphenylpropane, 4,4′-diaminodiphenylsulfide, α,α′-bis(4-aminophenyl)-p-isopropylbenzene or α,α′-bis(4-aminophenyl)- m-isopropylbenzene.

The diacyloyl diamine component (b) contains an aromatic dicarboxylic acid component as represented by HOOC-Ar-COOH in which Ar represents a divalent aromatic hydrocarbon group of 6-20 carbons except 1,3-phenylene group. The aromatic dicarboxylic acid component may be exemplified by, for example, terephthalic acid, phthalic acid, 2,6-naphthalenedicarboxylic acid, 1,4-naphthalenedicarboxylic acid, 1,5-naphthalenedicarboxylic acid, 2,7-naphthalenedicarboxylic acid or 1,8-naphthalenedicarboxylic acid.

The random polyamide used in the invention has a chain structure composed of the isophthaloyl diamine component (a) and the diacyloyl diamine components (b) random in sequence. The chain structure may contain linear structures but also branch structures and cross-linked structures. The branch structure and cross-linked structure may be formed through the diamine component in the isophthaloyl diamine component (a) and the diacyloyl diamine component (b). However, it is preferred that the random polyamide is of straight chain or branched chain structures, namely of substantially linear structures, and is

such that it is soluble in concentrated sulfuric acid or m-cresol at a temperature of 30° C.

The random polyamide may be terminated either with an diamine component or an aromatic dicarboxylic acid component inclusive of an isophthalic acid component. When the random polyamide is terminated with an alkylenediamine component, the terminal amino group may be acylated with a lower carboxylic acid or may form a salt structure. Further when the polymer is terminated with terephthalic acid, isphthalic acid or carboxyphthalic acid components, the terminal carboxyl may be esterified with a lower alcohol, or may be of an amide, a salt or an acid anhydride structure.

The polyamide resin composition of the invention contains the polyamide (B) composed of:

(c) diamine components of 4-25 carbons and dicarboxylic acid components of 4-20 carbons which have no aromatic nuclei;

(d) aminocarboxylic acid components; or

(e) diamine components of 4-25 carbons, dicarboxylic acid components of 4-20 carbons which have no aromatic nuclei and aminocarboxylic acid components.

Further,the polyamide has chain structures, preferably of linear structures.

The diamine component (c) in the polyamide (B) may be either an aliphatic, or an alicyclic or an aromatic diamine, of 4-25 carbons, as set out hereinbefore, an may contain substituents thereon.

Therefore, the diamine component (c) may be aliphatic diamines such as 1,4-diaminobutane, 1,5-diaminopentane, 1,6-diaminohexane, 1,7-diaminoheptane, 1,8-diaminooctane, 1,9-diaminononane, 1,10-diaminonodecane, 1,11-diaminonoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane or 1,20-diaminonoeicosan; alicyclic diamines such as 1,3-diaminocyclohexane, 1,4-diaminocyclohexane, 1,3-bis(aminomethyl)cyclohexane, 1,4-bis(aminomethyl)-cyclohexane, isophoronediamine, piperadine, 2,5-dimethylpiperadine, bis(4-aminocyclohexyl)methane, bis(4-aminocyclohexyl)propane, 3,3′-diaminodicyclohexylmethane, 3,3′-diaminodicyclohexylpropane, 3,4′-diaminodicyclohexylmethane, 3,3′-diamenodicyclohexylpropane, 4,4′-diamino-3,3′-dimethyldicyclohexylmethane, 4,4′-diamino-3,3′-dimethyldicyclohexylpropane, 4,4′-diamino-3,3′,5,5′-tetramethyldicyclohexylmethane, 4,4′-diamino-3,3′, 5,5′-tetramethyldicyclohexylpropane, 4,4′-diamino-3,3′-dimethyldicyclohexyl, 4,4′-diamino-3,3′,5,5′-tetramethyldicyclohexyl, $\alpha,\alpha'$-bis(4-aminocyclohexyl)-p-diisopropylbenzene, $\alpha,\alpha'$-bis(4-aminocyclohexyl) -m-diisopropylbenzene or $\alpha,\alpha'$-bis(4-aminocyclohexyl)-1,3-cyclohexane; or aromatic diamines such as p-phenylenediamine, m-phenylenediamine, p-xylylenediamine, m-xylylenediamine, 4,4′-diaminodiphenylmethane, 4,4′-diaminodiphenylether, 4,4′-diaminodiphenylpropane, 4,4′-diaminodiphenylsulfide, $\alpha,\alpha'$-bis(4-aminophenyl)-p-isopropylbenzene or $\alpha,\alpha'$-bis(4-aminophenyl)-m-isopropylbenzene.

The diamines (c) may be used singly or as a mixture of two or more. However, among the above exemplified, diamines of 4-16 carbons are preferred, and in particular 1,4-diaminobutane, 1,6-diaminohexane or a mixture of these.

The dicarboxylic acid components of 4-20 carbons which have no aromatic nuclei in the polyamide (B) may be an aliphatic or an alicyclic dicarboxylic acid which may contain substituents thereon, and may be exemplified by, for example, succinic acid, adipic acid, azelaic acid, sebacic acid, decanedioic acid, dodecanedioic acid or cyclohexanedicarboxylic acid. The dicarboxylic acid component may be used singly or as a mixture. However, among the above, dicarboxylic acids of 6-16 carbons are preferred, and in particular adipic acid, sebacic acid or a mixture of these.

As the aminocarboxylic acid component (d) in the polyamide (B) is preferred $\omega$-aminocarboxylic acids which have 6-12 carbons, such as 6-aminocaproic acid, 12-aminododecanoic acid or 11-aminoundecanoic acid among others, and may be used singly or as a mixture with the others.

The polyamide (B) may also be termitated either with an diamine, or a diacarboxylic acid or both of these, and may be acylated, or may be in the form of salts or acids anhydrides. Thus, nylon 66 or 6 is preferably used as the polyamide (B).

The polyamide resin composition of the invention contains the random polyamide (A) and the polyamide (B) in such proportions that the polyamide (B) is not more than 90 % by weight, preferably in the range of 80-5 % by weight, most preferably in the range of 75-10 % by weight, based on the total of the random polyamide (A) and the polyamide (B).

The polyamide resin composition of the invention may further contain additives, if desired, such as antioxidants, ultraviolet absorbers, anti-weathering agents, phosphite stabilizers, hydrogen peroxide decomposing agents, nucleating agents, plasticizers, lubricants, antistatic agents, fire retardants, pigments, dyes, carbon black, asbesto fibers, glass fibers, kaolin, talc, silica or silica-alumina, or second polymers in amounts which do not adversely affect the desired properties of the polyamide resin composition.

It is preferred that the polyamide resin composition of the invention has the following properties:

(1) a melt flow rate of 0.1-200 g/10 minutes, preferably of 1-150 g/10 minutes, as determined at 2 kg load at 300°C;

(2) an intrinsic viscosity [η] of 0.4-2 dl/g, preferably of 0.5-1.5 dl/g as determined in concentrated sulfuric acid at 30°C when the resin composition is soluble therein;

(3) a degree of crystallinity of not more than 7 %, preferably of not more than 5 %, as determined by X-ray diffraction analysis; and

(4) a glass transition temperature Tg of 40-240°C, preferably of 50-200°C, as determined with a differential scanning calorimeter at a temperature raise of 10°C/minute.

The random polyamide (A) used in the invention may be produced by solution or interfacial polycondensation of aromatic dicarboxylic acid halides and diamines as the components of the aforesaid isophthaloyl diamine component (a) and the diacyloyl diamine component (b). The random polyamide (A) may also be produced by subjecting melted low degree condensates such as nylon salts or oligomers of the aromatic dicarboxylic acids and diamines as the components in the random polyamine (A) to polycondensation under shearing.

In any method of the above exemplified, the random polyamide (A) is obtained which is composed of the isophthaloyl diamine component in amounts of 50-100 mole % and the diacyloyl diamine component in amounts of 50-0 mole % by properly selecting the aromatic carboxylic acid halides, aromatic carboxylic acids and diamines used.

Among the above methods, the third one, i.e., melt polycondensation method is preferred from the industrial standpoint.

The polyamide (B) may also be produced by solution polycondensation, interfacial polycondensation or melt polycondensation, similarly to the random polyamide (A). These polycondensations are well known in the art. Usually about equimolar amounts of diamines and dicarboxylic acids are polycondensated. More specifically, diamines and dicarboxylic acids are used in amounts of about 48-52 mole %, respectively. When aminocarboxylic acids are used together with diamines and dicarboxylic acids, the last two are used in about equimolar amounts, as described above.

The random polyamide (A) and the polyamide (B) are powdered or pelletized, and then kneaded and blended together, to provide a polyamide resin composition of the invention. As described above, the polyamide resin composition of the invention may be produced by first separately producing the random polyamide (A) and the polyamide (B), and then kneading and blending them together. However, the composition may also be produced by reacting diamines, aromatic carboxylic acids and aminocarboxylic acids together in such amounts as determined from molar fractions thereof in the polyamide resin composition.

The polyamide resin composition of the invention may be used singly or as a main components in the production of molded articles, or may be used as blends or laminates with other resins such as polyethylene terephthalate, polycarbonate or polyolefins in the production of package materials such as bottles or laminated films.

In use of the polyamide resin composition of the invention as blends with other resins, the polyamide resin composition is contained in the blend usually in amounts of about 3-200 parts by weight, preferably in amounts of about 5-180 parts by weight, and most preferably in amounts of about 5- 150 parts by weight, in relation to 100 parts of the other resins.

Laminates may be produced by, for example, multi-layer extrusion. When P is taken as the polyamide resin composition of the invention, and P as a second resin, then the laminate may be, for example,of structures of P/O, O/P/O, and the like, among others, although not limited thereto. The laminate is usually so formed as to be of not less than 2 µm, preferably of not less than 3 µm, most preferably of not less than 5 µm in thickness.

The polyamide resin composition of the invention is of a high moldability, heat resistance, mechanical strength, transparency and gas barrier but also of a low glass transition temperature, so that the composition is readily laminated with other resins and suitable for use as gas impermeable package materials as well as molded articles.

The invention will now be described more specifically with reference to productions of polyamides used in the invention and resin compositions, and multi-layer bottles of the composition, however, these examples are illustllative only, and the invention is not limited thereto.

The components, melting points, intrinsic viscosities, melt flow rates and degrees of crystallinity of polyamides produced were determined as follows.

Components of polyamides:

The components of polyamides were determined by $^{13}C$-NMR spectrometry in hexafluoroisopropanol and elemental analysis of polyamides or low degree condensates as materials for the polyamides.

Glass transition temperature:

The glass transition temperatures Tg of resins were determined with a differential scanning calorimeter (Model DSC-2, by Pwekin Elmer) at a temperature raise of 10°C/minute.

Intrinsic viscosity:

The intrinsic viscosity [η] of resins were determined by first measuring specific viscositis of 0.500 g/dl, 0.770 g/dl and 1.00 g/dl concentrations resin solutions in 96 % sulfuric acid, respectively, at 30°C with an Ubbelohde's viscometer, and then by plotting the specific viscosities against the resin cincentrations. The above solutions were prepares at 30°C.

Melt flow rate:

The melt flow rate of resins was determined at 300°C at 2 kg load in accordance with JIS K 7210.

Crystallinity:

The crystallinity was determined by wide range (2θ: 70°-3°) X-ray diffraction method of pressed sheets of resins.

Gas permeabilities:

Oxygen permeability was measured with "Oxytran" apparatus by Mocon, and carbon dioxide permeability with "Permatran C- IV" apparatus by Mocon, at 25°C respectively.

Production of Polyamides

Example 1

Component (A)

An amount of 89.22 g (0.537 mole) of terephthalic acid, 208.17 g (1.254 mole) of isophthalic acid, 193.54 g (0.92mole) of bis(4-aminocyclohexyl)methane and 106.9 g (0.92 mole) of 1,6-diaminohexane were placed in an 1-liter capacity autoclave together with 68 g of deionized water and 0.38 g (0.00358 mole) of sodium hypophosphite.

After the inside of the autoclave was displaced by nitrogen, the mixture was raised to 250°C in three hours under stirring, and the reaction was further carried out for another one hour. After the reaction, a low condensate as the reaction product was taken out of the autoclave, and then dried overnight at 50°C and 100 mmHg under nitrogen.

The low condensate was found to have an intrisic viscosity [η] of 0.12 dl/g as determined in concentrated sulfuric acid at 30°C.

The low condensate was melt-polycondensated with a two-screw extruder (screw diameter: 30 mm; L/D: 42; barrel temperature (°C): 80/180/340/340/280/280/260/260; third, fourth and sixth zones: air vent; rotation:

50 rpm; oligomer feed: 2 kg/hr; vent: nitrogen purge), to provide a colorless and transparent polyamides.

The mole % contents of isophthalic acid components, terephthalic acid components, bis(4-aminocyclohexyl)methane components and 1,6-diaminohexane components in the polyamide are shown in Table 1.

In Table 1, materials used are abbreviated to as follows. TA: terephthalic acid
IA: isophthalic acid
$C_6$DA: 1,6-diaminohexane
ACM: bis(4-aminocyclohexyl)methane
DMACM: 4,4′-diamino-3,3′-dimethyldicyclohexyl)methane
AMC: 1,3-bis(aminomethyl)cyclohexane
APA: adipic acid
ACA: aminocaproic acid

Component (B)

An amount of 119.48 g (1.03 mole) of 1,6-diaminohexane and 146 g (1.00 mole) of adipic acid were placed in an autoclave, and melt polycondensation was carried out in a conventional manner, to provide nylon 6/6.

Polyamide Resin Composition

The components (A) and (B) were melt-blended in amounts shown in table 1 with an extruder.

Examples 2-5

The diamine used or the amount of the diamine used was varied as shown in Table 1, and otherwise in the same manner as in Example 1, the compoents (A) and (B) were prepared, and then polyamide resin compositions were prepared. The properties of the resin compositions are shown in Table 1.

Example 6

Pellets of the polyamide composition prepared in Example 1 were dried at 100°C under 1 mmHg in a nitrogen atmosphere for 12 hours. Then the pellets were hot-pressed under 100 kg/cm$^2$ at a temperature higher than the Tg by 120°C with a press molding machine, and then cold-pressed at 20°C, to provide transparent sheets of about 100 µm in thickness.

The sheet was cut to a predetermined size and dried at 100°C under 40 mmHg in a nitrogen atmosphere for 12 hours. The gas permeability of the sheet was shown in Table 2.

Example 7-10

The polyamide composition prepared in Examples 2-5 were used in place of the polyamide composition prepared in Example 1, and otherwise in the same manner as in Example 6, sheets were prepared. The gas permeability of the sheets are shown in Table 2.

Example 11

A polyethylene terephthalate resin (Mitsui Pet J 125, by Mitsui Pet Jushi K.K.) was melted with a first extruder, while the polyamide composition prepared in Example 1 was melted with a second extruder. Both the resins were supplied to a three layer pipe die to provide polyethylene terephthalate/polyamide composition/polyethylene terephthalate three layer pipes of about 1.2 mm/1.2 mm/1.2 mm in thickness, respectively, and 24.8 mm in outer diameter and 3.6 mm in wall thickness.

The pipe was cut to a length, and melted at one of the ends to seal it to form a bottom, and melted at the other end to form an opening, thereby to form a preform of 16.5 cm in length and 50 g in weight.

The preform was then biaxially oriented (2.5 times londitudinally and 4 times laterally) with a biaxial orientation blow molding machine (LB01 by Corpoplast), to provide a polyethylene terephthalate/polyamide/polyethylene terephthalate (each layer of about 120 μm) three layer bottle of 1.5 liters in capacity. The gas permeability of the bottle is shown in Table 3.

Example 12-15

The polyamides composition prepared in Examples 2-5 were used in place of the polyamide composition prepared in Example 1, and otherwise in the same manner as in Example 11, three layer laminate bottles were prepared. The gas permeabilities of the bottles are shown in Table 3.

Table 1

| | Examples | | | | |
|---|---|---|---|---|---|
| | 1 | 2 | 3 | 4 | 5 |
| Component (A) | | | | | |
| Materials[1] | | | | | |
| Diamines | $C_6$DA/ACM | $C_6$DA/ACM | $C_6$DA/DMACM | $C_6$DA/AMC | $C_6$DA/AMC |
| Molar ratios | 50/50 | 75/25 | 75/25 | 75/25 | 75/25 |
| Dicarboxylic acids | TA/IA | TA/IA | TA/IA | TA/IA | TA/IA |
| Molar ratios | 30/70 | 30/70 | 30/70 | 30/70 | 30/70 |
| Polyamide resins | | | | | |
| Diamines | $C_6$DA/ACM | $C_6$DA/ACM | $C_6$DA/DMACM | $C_6$DA/AMC | $C_6$DA/AMC |
| Molar ratios | 49/51 | 74/26 | 74/26 | 75/25 | 75/25 |
| Dicarboxylic acids | TA/IA | TA/IA | TA/IA | TA/IA | TA/IA |
| Molar ratios | 30/70 | 30/70 | 30/70 | 30/70 | 30/70 |
| Melt flow rates (g/10 min.)[2] | 2.1 | 12.3 | 18.4 | 15.6 | 15.6 |
| Intrinsic viscosities (dl/g)[3] | 0.64 | 0.71 | 0.68 | 0.70 | 0.70 |
| Glass transition temperatures (°C) | 189 | 160 | 154 | 150 | 150 |
| Degrees of crystallinity (%) | 0 | 0 | 0 | 0 | 0 |

Notes: 1) Molar ratio of dicarboxylic acid/diamine fed of 1.00/1.03

2) At a load of 2 kg and 300°C

3) As solutions in concentrated sulfuric acid at 30°C

Table 1 (Continued)

| | Examples | | | | |
|---|---|---|---|---|---|
| | 1 | 2 | 3 | 4 | 5 |
| Component (B) | | | | | |
| Materials[1] | | | | | |
| Diamines | $C_6DA$ | $C_6DA$ | $C_6DA$ | $C_6DA$ | — |
| Molar ratios | 100 | 100 | 100 | 100 | — |
| Dicarboxylic acids (d) | APA | APA | APA | APA | — |
| Molar ratios | 100 | 100 | 100 | 100 | — |
| Aminocarboxylic acids (e) | — | — | — | — | ACA |
| Molar ratios | — | — | — | — | 100 |
| Polyamide resins | | | | | |
| Diamines | $C_6DA$ | $C_6DA$ | $C_6DA$ | $C_6DA$ | — |
| Molar ratios | 100 | 100 | 100 | 100 | — |
| Dicarboxylic acids | APA | APA | APA | APA | — |
| Molar ratios | 100 | 100 | 100 | 100 | — |
| Melt flow rates (g/10 min.)[2] | 25.5 | 25.5 | 25.5 | 25.5 | 98.6 |
| Intrinsic viscosities (dl/g)[3] | 0.72 | 0.72 | 0.72 | 0.72 | 0.79 |
| Glass transition temperatures (°C) | 60 | 60 | 60 | 60 | 55 |
| Degrees of crystallinity (%) | 40 | 40 | 40 | 40 | 43 |

Notes: 1) Molar ratio of dicarboxylic acid/diamine fed of 1.00/1.03

2) At a load of 2 kg and 300°C

3) As solutions in concentrated sulfuric acid at 30°C

Table 1 (Continued)

| | Examples | | | | |
|---|---|---|---|---|---|
| | 1 | 2 | 3 | 4 | 5 |
| Resin composition | | | | | |
| (A) (% by weight) | 50 | 50 | 50 | 50 | 50 |
| (B) (% by weight) | 50 | 50 | 50 | 50 | 50 |
| Properties of resin composition | | | | | |
| Melt flow rates (g/10 min.)[1] | 16.1 | 20.2 | 21.7 | 19.8 | 54.3 |
| Intrinsic viscosities (dl/g)[2] | 0.68 | 0.72 | 0.70 | 0.70 | 0.73 |
| Glass transition temperatures (°C) | 118 | 85 | 82 | 78 | 76 |
| Degrees of crystallinity (%) | 0 | 0 | 0 | 0 | 0 |

Notes: 1) At a load of 2 kg and 300°C

2) As solutions in concentrated sulfuric acid at 30°C

Table 2

| | Examples | | | | |
|---|---|---|---|---|---|
| | 6 | 7 | 8 | 9 | 10 |
| Polyamide compositions used | 1 | 2 | 3 | 4 | 5 |
| Oxygen permeability ($ml \cdot mm/m^2 \cdot day \cdot atm$) | 1.3 | 1.6 | 1.7 | 1.9 | 1.6 |
| Carbon dioxide permeability ($ml \cdot mm/m^2 \cdot day \cdot atm$) | 4.9 | 6.2 | 6.3 | 6.7 | 6.3 |

Table 3

| | Examples | | | | | Comparative Examples | |
|---|---|---|---|---|---|---|---|
| | 11 | 12 | 13 | 14 | 15 | 1 | 2 |
| Polyamide compositions used | 1 | 2 | 3 | 4 | 5 | | |
| Oxygen permeability ($ml \cdot mm/m^2 \cdot day \cdot atm$) | 2.3 | 2.5 | 2.6 | 2.9 | 2.4 | 4.6 | 3.8 |
| Carbon dioxide permeability ($ml \cdot mm/m^2 \cdot day \cdot atm$) | 8.2 | 10.1 | 10.5 | 11.2 | 10.4 | 25.0 | 12.8 |

Comparative Example 1

Using only the same polyethylene terephthalate resin as Example 11, bottles were prepared in the same manner as in Example 11. The gas barrier of the bottles are shown in Table 3.

Comparative Example 2

Using 208.17 g (1.253 mole) of terephthalic acid, 89.22 g (0.537 mole) of isophthalic acid and 213.83 g (1.84 mole) of 1,6-diaminohexane, and otherwise in the same manner as in Example 1, a cystalline white polyamide was produced, which was found to have a melting point of 310° C, a Tg of 125° C, an intrinsic viscosity [$\eta$] of 1.2 dl/g and a crystallinity of 25 %.

With use of this polyamide, a three layered bottle was produced in the same manner as in Example 11. The gas barrier of the bottle is shown in Table 3.

## Claims

1. A polyamide resin composition which comprises:

(A) a random polyamide comprising (a) at least one isophthaloyl diamine component represented by the general formula (I) of

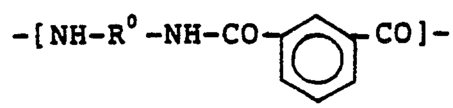

wherein $R^0$ represents a divalent hydrocarbon group of 4-25 carbons, in a total amount of 50-100 mole %; and

(b) at least one diacyloyl diamine component represented by the general formula (II) of

$-[NH-R^0-NHCO-Ar-CO]-$

wherein $R^0$ is as defined above and Ar represents a divalent aromatic hydrocarbon group of 6-20 carbons but is not a 1,3-phenylene group, in a total amount of 50-0 mole %, and

(B) a polyamide comprising:

(c) at least one diamine component of 4-25 carbons or dicarboxylic acid component of 4-20 carbons which have no aromatic nuclei; or

(d) at least one aminocarboxylic acid component; or

(e) at least one diamine component of 4-25 carbons, dicarboxylic acid component of 4-20 carbons which has no aromatic nuclei, or aminocarboxylic acid component.

2. A polyamide resin composition according to Claim 1 comprising the at least one isophthaloyl diamine component in an amount of 60-95 mole % and the at least one diacyloyl diamine component in an amount of 5-40 mole %.

3. A polyamide resin composition according to Claim 1 comprising the at least one isophthaloyl diamine component in an amount of 65-85 mole % and the at least one diacyloyl diamine component in an amount of 15-35 %.

4. A polyamide resin composition according to any one of the preceding claims wherein the at least one isophthaloyl diamine component and the at least one diacyloyl diamine component each comprise a first diamine component wherein $R^0$ is $R^1$ in an amount of 5-98 mole % and a second diamine component wherein $R^0$ is $R^2$ and/or $R^3$ in an amount of 95-2 mole % wherein $R^1$ is a divalent aliphatic hydrocarbon group of 4-25 carbon atoms; $R^2$ is a divalent alicyclic hydrocarbon group of 6-25 carbon atoms; and $R^3$ is a divalent aromatic hydrocabon group of 6-25 carbon atoms.

5. A polyamide resin composition according to Claim 4 comprising the first diamine component in an amount of 40-85 mole % and the second diamine component in an amount of 60-15 mole %.

6. A polyamide resin composition according to any one of the preceding claims which has a melt flow rate of 1.66 x $10^{-4}$ to 0.33g/s (0.1-200 g/10 minutes) as determined at 300°C at a load of 2 kg, a crystallinity of not less than 7 % as determined by an X-ray diffraction method, and a glass transition temperature of 40-240°C.

7. A laminate or blend which comprises: a polyamide resin composition as claimed in any one of the preceding claims and a second resin.

8. A laminate or blend as claimed in Claim 7 wherein the second resin comprises polyethylene terephthalate, polycarbonate or a polyolefin.

9. A moulded article manufactured from a polyamide resin composition according to any one of Claims 1 to 6, or a laminate or blend according to Claim 7 or 8.

10. A moulded article according to Claim 9 which is a bottle.